# FASCICULE DE BREVET EUROPEEN

(11) **EP 1 267 050 B1**
(45) Date de publication et mention de la délivrance du brevet: **09.02.2005**
(21) Numéro de dépôt: 02291454.3
(22) Date de dépôt: 11.06.2002
(51) Int. Cl.: F01P 11/20, B60H 1/00

(54) **Dispositif perfectionné de régulation thermique à stockage d'énergie pour véhicule automobile**
Wärmesteuervorrichtung eines Wärmespeichers für Kraftfahrzeuge
Heat control device for thermal energy storage for motor cars

(30) Priorité: 12.06.2001 FR 0107694
(43) Date de publication de la demande: 18.12.2002
(73) Titulaire: Peugeot Citroen Automobiles SA, 92200 Neuilly sur Seine (FR)
(72) Inventeur: Hocine, Ali, 92400 Courbevoie (FR); Amaral, Manuel, 75015 Paris (FR)
(74) Mandataire: de la Bigne, Guillaume Michel Marie

(56) Documents cités:
- EP-A- 0 634 565
- FR-A- 2 697 869
- FR-A- 2 712 848
- US-A- 5 076 248
- PATENT ABSTRACTS OF JAPAN vol. 017, no. 059 (M-1363), 5 février 1993 (1993-02-05) & JP 04 269323 A (KUBOTA CORP), 25 septembre 1992 (1992-09-25)

## Description

La présente invention concerne un dispositif perfectionné de régulation thermique à stockage d'énergie pour véhicule automobile.

Elle s'applique en particulier à la régulation thermique d'un moteur à combustion interne et d'un habitacle de véhicule automobile à l'aide de moyens de stockage d'énergie.

Dans ce qui suit, deux organes sont dits couplés thermiquement entre eux lorsqu'ils échangent de la chaleur entre eux au moyen d'un échangeur thermique approprié.

Lors du démarrage d'un véhicule automobile, il est connu d'accélérer la montée en température du moteur à combustion interne de ce véhicule à l'aide de moyens de stockage d'énergie thermique couplés thermiquement à un circuit de liquide de refroidissement de ce moteur. Le liquide de refroidissement est généralement un mélange d'eau et d'antigel (glycol).

Les moyens de stockage d'énergie thermique utilisés pour cette application sont par exemple de deux types.

Les moyens du premier type comprennent un accumulateur de chaleur latente susceptible de transférer de la chaleur vers le liquide de refroidissement du moteur par changement de phase (liquide -> solide) d'un sel. Les moyens du second type comprennent un mélange d'un solide et d'un gaz appropriés susceptible de transférer de la chaleur vers le liquide de refroidissement du moteur par création d'une réaction exothermique. Ces réactions sont réversibles par post-régénération.

Lors du démarrage du véhicule, le liquide de refroidissement, encore froid en sortant du moteur, est mis en circulation par une pompe électrique à travers les moyens de stockage d'énergie. Ces derniers transmettent des calories à l'eau de refroidissement par convection. Le transfert de chaleur vers le liquide de refroidissement est rapide et permet par exemple d'élever la température du liquide de refroidissement d'environ 65°C en moins de 10 secondes.

Pour pouvoir réaliser un nouveau cycle de chauffage du liquide de refroidissement lors d'un prochain démarrage du véhicule, il convient de régénérer les moyens de stockage d'énergie thermique. Cette régénération est réalisée généralement lorsque le moteur est suffisamment chaud, par apport d'énergie aux moyens de stockage via le liquide de refroidissement. La régénération des moyens de stockage d'énergie du premier type produit le retour du sel en phase liquide. La régénération des moyens de stockage d'énergie du second type produit le retour du solide et du gaz à leur état initial

On connaît déjà dans l'état de la technique, notamment d'après RU-2043532, un dispositif de régulation thermique pour véhicule automobile, du type comportant un circuit de liquide caloporteur comprenant :
- une branche de régulation thermique,
- une première branche munie de moyens de stockage d'énergie susceptibles d'être régénérés, dite première branche de stockage d'énergie, et
- des moyens de raccordement sélectif de la première branche de stockage d'énergie à la branche de régulation thermique.

Dans le document ci-dessus, la branche de régulation thermique est une branche de circuit de liquide de refroidissement d'un moteur à combustion interne du véhicule. Les moyens de stockage d'énergie sont destinés à être régénérés par des calories prélevées dans un circuit de gaz d'échappement émis par le moteur à combustion interne. A cet effet, les moyens de stockage d'énergie sont couplés thermiquement à la fois au circuit de refroidissement du moteur et au circuit de gaz d'échappement. Ceci pose des problèmes d'implantation des moyens de stockage d'énergie dans le véhicule, ces moyens de stockage étant susceptibles d'être encrassés par des fuites de gaz d'échappement les traversant.

FR-A-2 712 848 décrit un dispositif de régulation thermique du même type que celui de RU-2 043 532 dans lequel le circuit de liquide caloporteur comprend de plus une seconde branche munie de moyens de stockage d'énergie susceptibles d'être régénérés, dite seconde branche de stockage d'énergie.

L'invention a pour but de proposer un dispositif de régulation thermique pour véhicule automobile comportant des moyens de stockage d'énergie susceptibles d'être régénérés par prélèvement de calories, selon les cas, dans les gaz d'échappement ou dans le liquide de refroidissement du moteur, les moyens de stockage d'énergie étant simples à implanter dans le véhicule et préservés des risques d'encrassement, le dispositif de régulation thermique pouvant fournir des calories au moteur ou à l'habitacle du véhicule même lorsque ce moteur est à l'arrêt.

A cet effet, l'invention a pour objet un dispositif de régulation thermique pour véhicule automobile, du type décrit dans FR-A-2 712 848, caractérisé en ce que le circuit de liquide caloporteur comprend en outre :
- une branche de régénération des moyens de stockage d'énergie de la seconde branche de stockage d'énergie, cette branche de régénération comportant des moyens destinés à céder des calories aux moyens de stockage d'énergie, et
- des moyens de raccordement sélectif de la seconde branche de stockage d'énergie à la branche de régulation thermique et à la branche de régénération.

Suivant des caractéristiques de différents modes de réalisation de ce dispositif :
- la branche de régulation thermique comprend une partie amont, munie d'un aérotherme de régulation thermique d'un habitacle du véhicule, raccordée à une partie aval de régulation thermique d'un moteur à combustion interne du véhicule ;
- la branche de régénération comprend des moyens de prélèvement de calories dans les gaz d'échappement émis par le moteur à combustion interne, de préférence un échangeur thermique liquide caloporteur/ gaz d'échappement émis par le moteur à combustion interne ;
- le circuit de liquide caloporteur comprend des moyens de dérivation de la partie aval de régulation thermique, raccordant directement une sortie de l'aérotherme avec une entrée des moyens de stockage d'énergie de la seconde branche de stockage d'énergie ;
- le liquide caloporteur est un liquide de refroidissement du moteur à combustion interne, notamment un mélange d'eau et d'antigel ;
- la branche de régénération comprend un aérotherme supplémentaire de régulation thermique de l'habitacle ;
- la branche de régénération comprend des moyens de raccordement en parallèle de l'aérotherme supplémentaire à une branche de régulation thermique supplémentaire ;
- le dispositif comprend des moyens de dérivation des moyens de stockage d'énergie de la première branche de stockage d'énergie ;
- le dispositif comprend des moyens d'activation, de préférence de façon automatique, des moyens de dérivation des moyens de stockage d'énergie de la première branche de stockage d'énergie ;
- le circuit de liquide caloporteur comprend une vanne, de type trois voies, munie d'une première voie raccordée à une extrémité aval de la première branche de stockage d'énergie, d'une deuxième voie raccordée à une extrémité aval de la seconde branche de stockage d'énergie et à la branche de régénération, et d'une troisième voie raccordée à une extrémité amont de la branche de régulation thermique ;
- le circuit de liquide caloporteur comprend une vanne de type trois voies munie d'une première voie raccordée à une extrémité aval de la branche de régulation thermique, d'une deuxième voie raccordée à une extrémité amont de la seconde branche de stockage d'énergie, et d'une troisième voie raccordée à la branche de régénération ;
- la seconde branche de stockage d'énergie est munie d'une pompe électrique d'entraînement du liquide caloporteur ;
- les première et seconde branches de stockage d'énergie comprennent des moyens de stockage d'énergie communs ;
- les première et seconde branches de stockage d'énergie comprennent des moyens de stockage d'énergie séparés.

L'invention sera mieux comprise à la lecture de la description qui va suivre, donnée uniquement à titre d'exemple et faite en se référant aux dessins dans lesquels :
- les figures 1 à 5 sont des vues schématiques d'un dispositif de régulation thermique pour véhicule automobile, selon un premier mode de réalisation de l'invention, dans différentes configurations de fonctionnement ;
- les figures 6 et 7 sont des vues schématiques similaires aux figures précédentes d'un dispositif de régulation thermique pour véhicule automobile, selon respectivement des deuxième et troisième modes de réalisation de l'invention ;
- les figures 8 à 10 sont des vues schématiques similaires aux figures précédentes d'un dispositif de régulation thermique pour véhicule automobile selon un quatrième mode de réalisation de l'invention, dans différentes configurations de fonctionnement ;
- la figure 11 est une vue schématique similaire aux figures précédentes d'un dispositif de régulation thermique pour véhicule automobile selon un cinquième mode de réalisation de l'invention.

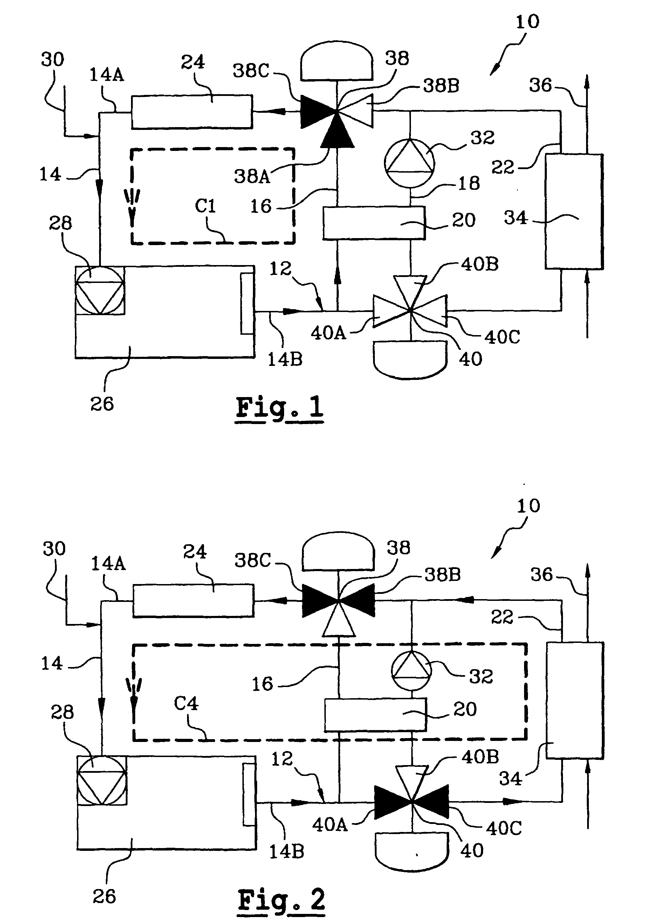

On a représenté sur les figures 1 à 5, un dispositif de régulation thermique pour véhicule automobile selon un premier mode de réalisation de l'invention, désigné par la référence générale 10.

Ce dispositif 10 comprend un circuit de liquide caloporteur 12 comprenant une branche de régulation thermique 14, deux branches 16,18 munies de moyens de stockage d'énergie 20 communs aux deux branches 16,18, dites première et seconde branches 16,18 de stockage d'énergie, et une branche 22 de régénération des moyens de stockage d'énergie 20 de la seconde branche 18 de stockage d'énergie.

Chaque branche 14,16,18,22 comporte des extrémités amont et aval entre lesquelles s'écoule le liquide caloporteur dans le sens indiqué par les flèches sur les figures. On notera que les deux extrémités amont et aval de la branche de régénération 22 sont réversibles.

La branche de régulation thermique 14 comprend une partie amont 14A munie d'un aérotherme 24 de régulation thermique d'un habitacle du véhicule raccordée à une partie aval 14B de régulation thermique. Cette partie aval 14B comprend un moteur 26 à combustion interne du véhicule, dont on souhaite réguler la température, et une pompe mécanique 28 d'entraînement du liquide caloporteur dans la branche de régulation thermique 14. Cette pompe 28, entraînée par le moteur 26, est fixée de façon classique sur ce dernier.

Le liquide caloporteur circulant dans le circuit 12 est un liquide de refroidissement du moteur 26, notamment un mélange d'eau et d'antigel (glycol). Le circuit 12 est raccordé à un conduit 30 d'alimentation en liquide caloporteur.

Les moyens de stockage d'énergie 20 comprennent deux entrées raccordées respectivement aux deux extrémités amont des première 16 et seconde 18 branches de stockage d'énergie, et deux sorties raccordées respectivement aux deux extrémités aval de ces première 16 et seconde 18 branches de stockage d'énergie.

Les moyens de stockage d'énergie 20 sont d'un type classique, par exemple du type à accumulateur de chaleur latente susceptible de transférer de la chaleur vers le liquide de refroidissement du moteur par changement de phase (liquide -> solide) d'un sel. En variante, les moyens de stockage d'énergie 20 peuvent être du type à chaleur sensible (eau chaude ou réaction solide/gaz).

La seconde branche 18 de stockage d'énergie comprend une pompe électrique 32 d'entraînement du liquide caloporteur raccordée aux moyens de stockage d'énergie 20, en aval de ces derniers.

La branche de régénération 22 comprend des moyens de prélèvement de calories à l'échappement comportant, dans les exemples illustrés, un échangeur thermique 34 liquide caloporteur/ gaz d'échappement émis par le moteur à combustion interne 26. Une branche 36 de circulation des gaz d'échappement à travers l'échangeur 34 est schématisée sur les figures.

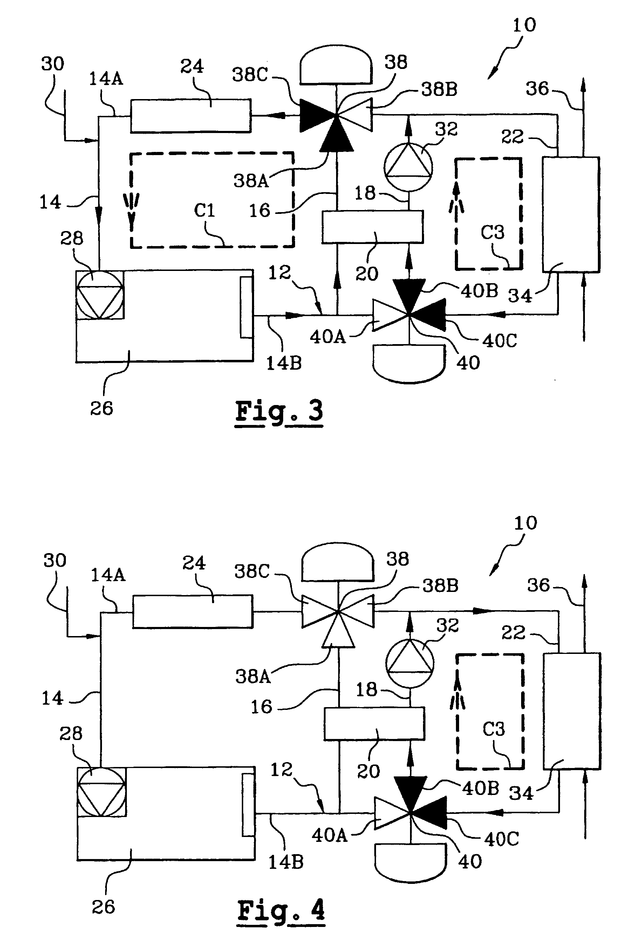

La première branche 16 de stockage d'énergie est susceptible d'être raccordée à la branche de régulation thermique 14, de façon à former une boucle C1 de circulation de liquide caloporteur telle que représentée en traits interrompus sur la figure 1 ou 3.

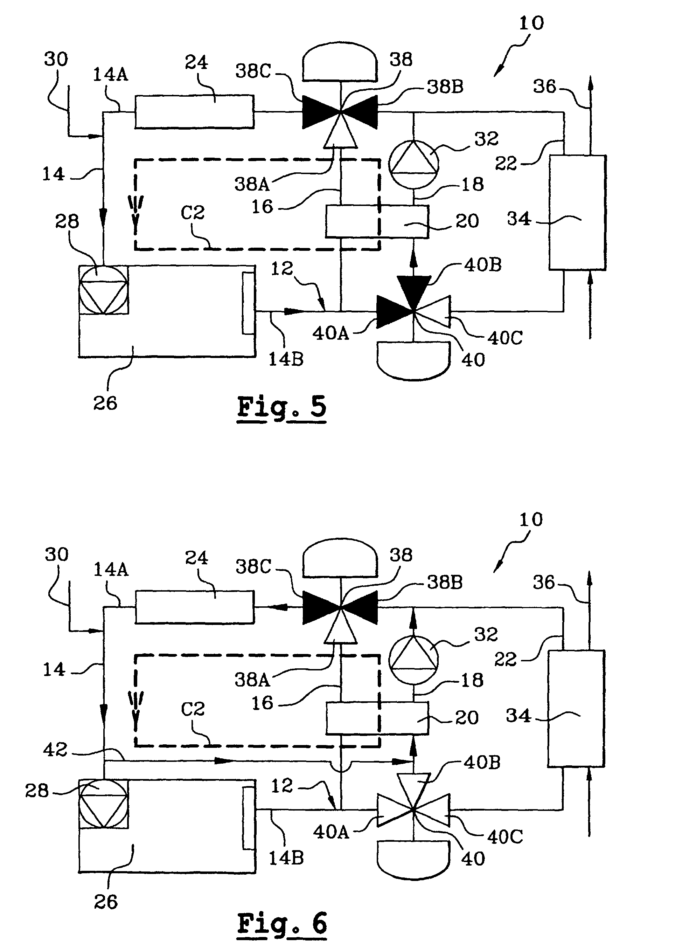

Par ailleurs, la seconde branche 18 de stockage d'énergie est susceptible d'être raccordée sélectivement, d'une part, à la branche de régulation thermique 14, de façon à former une boucle C2 de circulation de liquide caloporteur telle que représentée en traits interrompus sur la figure 5, et, d'autre part, à la branche de régénération 22, de façon à former une boucle C3 de circulation de liquide caloporteur telle que représentée en traits interrompus sur la figure 3 ou 4.

Enfin, les deux branches 16,18 de stockage d'énergie sont susceptibles d'être isolées des branches de régulation thermique 14 et de régénération 22 de façon que le circuit 12 forme une boucle C4 de circulation de liquide caloporteur, telle que représentée en traits interrompus sur la figure 2, dans laquelle la branche de régénération 22 est raccordée à la branche de régulation thermique 14.

Pour réaliser le raccordement ou l'isolation des différentes branches ci-dessus, le dispositif 10 comprend deux vannes 38,40, de type trois voies.

Une première vanne 38 est munie d'une première voie 38A raccordée à une extrémité aval de la première branche 16 de stockage d'énergie, d'une deuxième voie 38B raccordée à une extrémité aval de la seconde branche 18 de stockage d'énergie et à une première extrémité de la branche de régénération 22, et d'une troisième voie 38C raccordée à une extrémité amont de la branche de régulation thermique 14.

La seconde vanne 40 est munie d'une première voie 40A raccordée à une extrémité aval de la branche de régulation thermique 14, d'une deuxième voie 40B raccordée à une extrémité amont de la seconde branche 18 de stockage d'énergie, et d'une troisième voie 40C raccordée à la seconde extrémité de la branche de régénération 22.

On décrira ci-dessous les principaux réglages et aspects de fonctionnement du dispositif de régulation thermique 10 selon le premier mode de réalisation de l'invention en se référant aux figures 1 à 5 dans lesquelles les voies ouvertes des vannes 38, 40 sont noircies.

### 1. Les moyens de stockage d'énergie 20 sont initialement chargés.

### • Cas de conditions climatiques très froides (température de l'air environnant le véhicule voisine de -18 °C) ou froides (température de l'air environnant le véhicule voisine de -7 °C).

Lors du démarrage du véhicule (moteur 26 en fonctionnement), le dispositif de régulation thermique 10 est initialement réglé dans la configuration de fonctionnement illustrée sur la figure 1. Les vannes 38,40 sont réglées de façon, d'une part, à raccorder la première branche 16 de stockage d'énergie à la branche de régulation thermique 14 et, d'autre part, à isoler la seconde branche 18 de stockage d'énergie du circuit de liquide caloporteur 12. La pompe mécanique 28 est activée du fait du fonctionnement du moteur 26 alors que la pompe électrique 32 est à l'arrêt. Les moyens de stockage d'énergie 20 se déchargent en transférant les calories qu'ils ont emmagasinées dans le liquide caloporteur circulant à travers l'aérotherme 24 et le moteur 26 (boucle C1 illustrée sur la figure 1), afin de chauffer l'habitacle et d'accélérer la montée en température du moteur 26.

Dès que les moyens de stockage d'énergie 20 sont déchargés, les vannes 38,40 sont réglées de façon, d'une part, à isoler les deux branches 16,18 de stockage d'énergie du circuit 12 de liquide caloporteur (la pompe électrique 32 est à l'arrêt) et, d'autre part, à raccorder la branche de régénération 22 à la branche de régulation thermique 14. Le liquide caloporteur circule dans le circuit 12 conformément à la boucle C4 illustrée sur la figure 2, si bien que ce liquide caloporteur prélève les calories dans les gaz d'échappement, par l'intermédiaire de l'échangeur 34, et les restitue, d'une part, à l'habitacle, par l'intermédiaire de l'aérotherme 24, et d'autre part, au moteur 26.

Lorsque la température du liquide caloporteur circulant à travers l'aérotherme 24 et le moteur 26 atteint une valeur suffisante (par exemple égale à environ 83 °C à la sortie du moteur 26) pour permettre notamment le chauffage efficace de l'habitacle, les vannes 38,40 sont réglées comme cela est illustré sur la figure 3. Dans cette configuration, d'une part, la première branche 16 de stockage d'énergie est raccordée à la branche de régulation thermique 14 pour permettre notamment au liquide caloporteur (suffisamment chaud) de chauffer l'habitacle (boucle C1) et, d'autre part, la seconde branche 18 de stockage d'énergie est raccordée à la branche de régénération 22 pour recharger les moyens de stockage d'énergie 20 à l'aide des calories prélevées par le liquide caloporteur dans les gaz d'échappement (boucle C3). La pompe électrique 32 est activée.

Dès que la température de l'habitacle atteint une valeur souhaitée ou bien dès que la température du liquide caloporteur à la sortie de l'échangeur 34 atteint une valeur proche de l'ébullition de ce liquide caloporteur (par exemple 110 °C), les vannes 38,40 sont à nouveau réglées comme sur la figure 1. Ainsi, le liquide caloporteur, qui circule suivant la boucle C1, cède des calories aux moyens de stockage d'énergie 20 afin de recharger ces derniers.

### • Cas de conditions climatiques tempérées (température de l'air environnant le véhicule voisine de 20 °C).

Dans ce cas, l'aérotherme 24 (comportant habituellement un échangeur thermique liquide caloporteur/air associé à un ventilateur) est généralement à l'arrêt (ventilateur arrêté), si bien que le liquide caloporteur circulant à travers cet aérotherme 24 ne dissipe pas de calories dans l'habitacle.

Lors du démarrage du véhicule, le dispositif de régulation thermique 10 est initialement réglé dans la configuration de fonctionnement illustrée sur la figure 1. Ainsi, les moyens de stockage d'énergie 20 se déchargent en transférant les calories qu'ils ont emmagasinées dans le liquide caloporteur circulant à travers le moteur 26 (boucle C1) afin de d'accélérer la montée en température du moteur 26. Le liquide caloporteur ne dissipe pratiquement pas de calories dans l'aérotherme 24 puisque ce dernier est à l'arrêt.

Dès que les moyens de stockage d'énergie 20 sont déchargés, ceux-ci sont rechargés en deux phases.

Dans une première phase de recharge, les vannes 38,40 sont réglées de façon, d'une part, à isoler la première branche 16 de stockage d'énergie du circuit 12 de liquide caloporteur et, d'autre part, à raccorder la seconde branche 18 de stockage d'énergie à la branche de régénération 22. Le liquide caloporteur, entraîné par la pompe électrique 32, circule dans le circuit 12 suivant la boucle C3 illustrée sur la figure 4, si bien que ce liquide caloporteur prélève des calories dans les gaz d'échappement, par l'intermédiaire de l'échangeur 34, et les restitue aux moyens de stockage d'énergie 20 afin de les recharger.

La deuxième phase de recharge est déclenchée dès que la température du liquide caloporteur atteint une valeur souhaitée, par exemple dès que la température du liquide caloporteur à la sortie du moteur 26 est suffisante (par exemple égale à environ 83 °C ) ou bien dès que la température du liquide caloporteur à la sortie de l'échangeur 34 atteint une valeur proche de l'ébullition de ce liquide caloporteur (par exemple 110 °C).

Au cours de cette deuxième phase de recharge, les vannes 38,40 sont à nouveau réglées comme sur la figure 1. Ainsi, le liquide caloporteur, qui circule suivant la boucle C1, cède des calories aux moyens de stockage d'énergie 20 afin d'achever de recharger ces derniers.

### 2. Les moyens de stockage d'énergie 20 sont initialement déchargés.

### • Cas de conditions climatiques très froides (température de l'air environnant le véhicule voisine de -18 °C) ou froides (température de l'air environnant le véhicule voisine de -7 °C).

Lors du démarrage du véhicule, le dispositif de régulation thermique 10 est initialement réglé dans la configuration de fonctionnement illustrée sur la figure 2 (décrite précédemment), de façon que le liquide caloporteur, circulant suivant la boucle C4, prélève des calories dans les gaz d'échappement, par l'intermédiaire de l'échangeur 34, et les restitue, d'une part, à l'habitacle, par l'intermédiaire de l'aérotherme 24, et d'autre part, au moteur 26.

Lorsque la température du liquide caloporteur circulant à travers l'aérotherme 24 et le moteur 26 atteint une valeur suffisante (par exemple égale à environ 83 °C à la sortie du moteur 26) pour permettre notamment le chauffage efficace de l'habitacle, les vannes 38,40 sont réglées dans la configuration illustrée sur la figure 3 (décrite précédemment). Dans cette configuration, d'une part, le liquide caloporteur (suffisamment chaud) chauffe l'habitacle en cédant des calories par l'intermédiaire de l'aérotherme 24 (boucle C1) et, d'autre part, les moyens de stockage d'énergie 20 sont rechargés à l'aide de calories prélevées par le liquide caloporteur dans les gaz d'échappement par l'intermédiaire de l'échangeur 34 (boucle C3).

Dès que la température de l'habitacle atteint une valeur souhaitée ou bien dès que la température du liquide caloporteur à la sortie de l'échangeur 34 atteint une valeur proche de l'ébullition de ce liquide caloporteur (par exemple 110 °C), les vannes 38,40 sont réglées comme sur la figure 1. Ainsi, le liquide caloporteur, qui circule suivant la boucle C1, cède des calories aux moyens de stockage d'énergie 20 afin d'achever de recharger ces derniers.

### • Cas de conditions climatiques tempérées (température de l'air environnant le véhicule voisine de 20 °C).

Lors du démarrage du véhicule, le dispositif de régulation thermique 10 est initialement réglé dans la configuration de fonctionnement illustrée sur la figure 4. Ainsi, le liquide caloporteur circule dans le circuit 12 suivant la boucle C3, si bien que ce liquide caloporteur prélève des calories dans les gaz d'échappement, par l'intermédiaire de l'échangeur 34, et les restitue aux moyens de stockage d'énergie 20 afin de les recharger.

Dès que la température du liquide caloporteur atteint une valeur souhaitée, par exemple dès que la température du liquide caloporteur à la sortie du moteur 26 est suffisante (par exemple égale à environ 83 °C ) ou bien dès que la température du liquide caloporteur à la sortie de l'échangeur 34 atteint une valeur proche de l'ébullition de ce liquide caloporteur (par exemple 110 °C), les vannes 38,40 sont réglées comme sur la figure 1. Ainsi, le liquide caloporteur, qui circule suivant la boucle C1, cède des calories aux moyens de stockage d'énergie 20 afin d'achever de recharger ces derniers.

### 3. Les moyens de stockage d'énergie 20 sont initialement chargés et le moteur 26 est à l'arrêt.

Le moteur 26 étant à l'arrêt, le dispositif de régulation thermique 10 peut-être réglé dans la configuration de fonctionnement illustrée sur la figure 5. Dans ce cas, les vannes 38,40 sont réglées de façon, d'une part, à isoler la première branche 16 de stockage d'énergie du circuit 12 de liquide caloporteur et, d'autre part, à raccorder la seconde branche 18 de stockage d'énergie à la branche de régulation thermique 14.

Le liquide caloporteur est entraîné dans les branches 16 et 14, suivant la boucle C2, par la pompe électrique 32 suppléant la pompe mécanique 28 qui est à l'arrêt. Cette configuration de fonctionnement permet, le cas échéant, de chauffer l'habitacle alors que le moteur 26 est à l'arrêt (le liquide caloporteur cède à habitacle, par l'intermédiaire de l'aérotherme 24, des calories prélevées dans les moyens de stockage d'énergie 20).

Les vannes 38, 40 sont commandées par des moyens classiques électriques, mécaniques, thermomécaniques ou pneumatiques. Les vannes 38,40 peuvent être de type proportionnel pour permettre l'établissement de configurations de fonctionnement du dispositif 10 relativement complexes permettant, par exemple, de recharger les moyens de stockage d'énergie 20 tout en chauffant l'habitacle à l'aide de calories prélevées dans les gaz d'échappement, ceci en contrôlant le débit de liquide caloporteur traversant ces moyens de stockage d'énergie 20.

Sur les figures 6 à 11, on a représenté un dispositif 10 de régulation thermique selon des deuxième à cinquième modes de réalisation de l'invention. Sur ses figures 6 à 11, les éléments analogues à ceux des figures précédentes sont désignés par des références identiques.

Le circuit 12 de liquide caloporteur du dispositif 10 selon le deuxième mode de réalisation de l'invention, illustré sur la figure 6, comprend des moyens 42 de dérivation de la partie aval de régulation thermique 14B, raccordant directement une sortie de l'aérotherme 24 avec une entrée des moyens de stockage d'énergie 20 de la seconde branche 18 de stockage d'énergie.

Les moyens de dérivation 42 illustrés sur la figure 6 permettent, lorsque l'habitacle du véhicule est chauffé à l'aide de calories provenant des moyens de stockage d'énergie 20 (boucles C2, C1), d'éviter la dissipation dans le moteur 26 de calories provenant de ces moyens de stockage d'énergie 20.

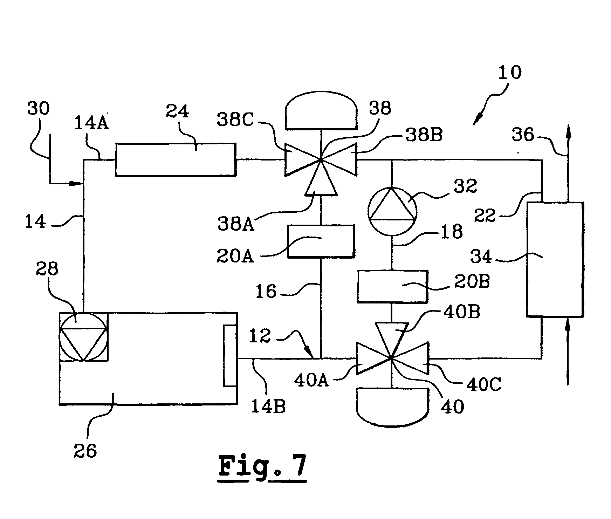

Dans le dispositif de régulation thermique 10 selon le troisième mode de réalisation de l'invention, illustré sur la figure 7, les première 16 et seconde 18 branches de stockage d'énergie comprennent des moyens 20A, 20B de stockage d'énergie séparés.

Dans ce cas, la taille des moyens 20A ou des moyens 20B est généralement inférieure à celle des moyens communs 20. Dans certaines conditions de fonctionnement du dispositif de régulation thermique 10, les moyens de stockage d'énergie séparés 20A, 20B sont plus efficaces et faciles à gérer que les moyens de stockage d'énergie communs 20, notamment lorsque le dispositif 10 est réglé de façon à chauffer l'habitacle lors d'un démarrage du moteur dans des conditions climatiques très froides ou froides.

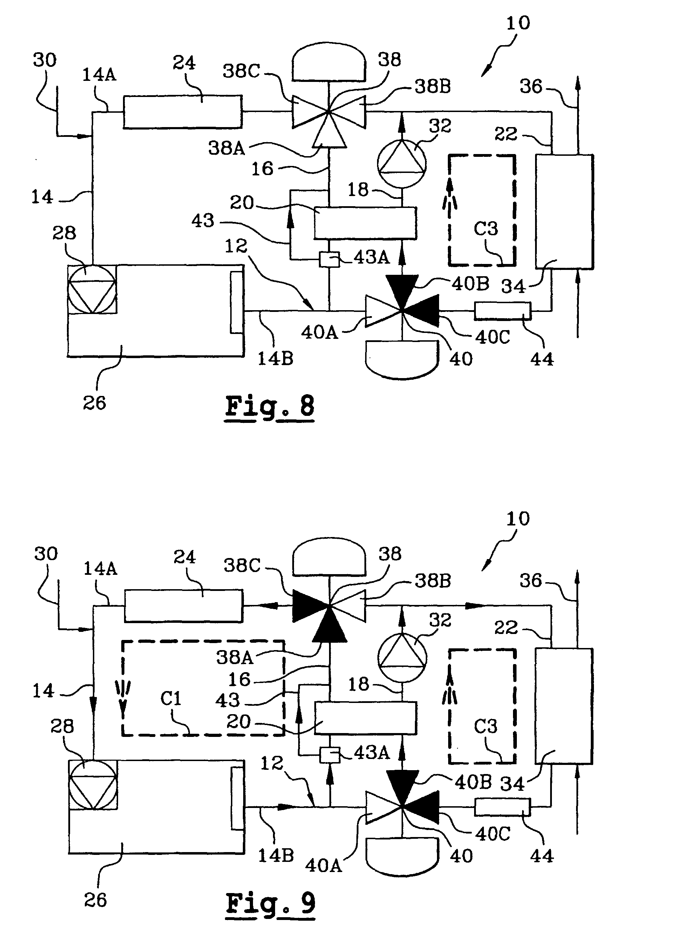

Dans le dispositif de régulation thermique 10 selon le quatrième mode de réalisation de l'invention, illustré sur les figures 8 à 10, la branche de régénération 22 comprend un aérotherme supplémentaire 44 de régulation thermique de l'habitacle. Cet aérotherme 44 est raccordé en série à l'échangeur thermique 34 liquide caloporteur/gaz d'échappement. Ainsi, l'aérotherme 44 est raccordé, d'une part, à la troisième voie 40C de la seconde vanne 40 et, d'autre part, à l'échangeur thermique 34.

Les deux aérothermes 24, 44 peuvent être agencés dans un conduit d'admission d'air, l'un en amont de l'autre, selon un choix qui sera déterminé par l'homme du métier en fonction de l'optimisation recherchée du dispositif de régulation thermique 10 dans les configurations de fonctionnement privilégiées.

Les deux aérothermes 24, 44 pourront être agencés dans une unité commune ou bien dans des unités séparées. Dans le premier cas, les deux aérothermes 24, 44 pourront comporter un ventilateur commun. Dans le second cas, un ventilateur sera associé à chaque aérotherme 24, 44.

Par ailleurs, le dispositif de régulation thermique 10 selon le quatrième mode de réalisation de l'invention comprend des moyens 43 de dérivation des moyens 20 de stockage d'énergie dans la première branche 16 de stockage d'énergie.

Les moyens de dérivation 43 sont activés à l'aide de moyens classiques 43A comprenant, par exemple une vanne trois voies. Ces moyens d'activation 43A peuvent être activés de façon automatique sous l'effet, par exemple, d'une cire dilatable classique dont la température de fusion coïncide sensiblement avec la température de passage de la phase solide à la phase liquide d'un sel formant accumulateur de chaleur latente dans les moyens de stockage d'énergie 20.

On décrira ci-dessous certains aspects de fonctionnement du dispositif de régulation thermique 10 selon le quatrième mode de réalisation de l'invention en se référant aux figures 8 à 10.

Ces aspects de fonctionnement seront décrits dans le cas suivant.

### Les moyens de stockage d'énergie 20 sont initialement chargés et les conditions climatiques sont très froides (température de l'air environnant le véhicule voisine de -18°C).

Le fonctionnement décrit ci-dessous propose un enchaînement de phases de fonctionnement selon une séquence pouvant durer par exemple une dizaine de minutes.

Pendant une première phase précédant le démarrage du moteur 26, le dispositif de régulation thermique 10 est initialement réglé dans la configuration de fonctionnement illustrée sur la figure 8. Les vannes 38, 40 sont réglées de façon, d'une part, à isoler la première branche 16 de stockage d'énergie du circuit 12 de liquide caloporteur et, d'autre part, à raccorder la seconde branche 18 de stockage d'énergie à la branche de régénération 22. La pompe électrique 32 -activée par un utilisateur, par exemple, au moyen d'une clé de commande- entraîne le liquide caloporteur dans le circuit 12 suivant la boucle C3 illustrée sur la figure 8.

Ainsi, les moyens de stockage d'énergie 20 se déchargent en transférant les calories qu'ils ont emmagasinées dans le liquide caloporteur circulant à travers l'aérotherme supplémentaire 44, afin de chauffer l'habitacle.

La durée de cette première phase est de préférence relativement courte, par exemple égale à 2 minutes environ.

Ensuite, l'utilisateur fait démarrer le véhicule (moteur 26 en fonctionnement).

Pendant une seconde phase suivant le démarrage du véhicule, les vannes 38, 40 sont réglées comme cela est illustré sur la figure 9. Dans cette configuration, d'une part, la première branche 16 de stockage d'énergie est raccordée à la branche de régulation thermique 14 pour permettre notamment au liquide caloporteur de chauffer l'habitacle (boucle C1) et, d'autre part, la seconde branche 18 de stockage d'énergie est raccordée à la branche de régénération 22 comme pendant la première phase de fonctionnement décrite ci-dessus (boucle C3).

La durée de cette seconde phase est par exemple égale à environ 2 minutes.

Pendant cette seconde phase, les moyens de dérivation 43 sont activés de façon à éviter que le liquide caloporteur circulant dans la première branche 16 de stockage d'énergie ne dissipe des calories dans les moyens 20 de stockage d'énergie.

La seconde phase de fonctionnement est suivie de troisième et quatrième phases au cours desquelles on augmente la quantité de calories véhiculées dans la partie aval 14B de la branche 14 de régulation thermique du moteur 26 et dans la branche 36 de circulation des gaz d'échappement, ceci en favorisant la surconsommation du moteur 26 par un procédé classique de post-injection ou de retard à l'avance d'injection.

Au cours de la troisième phase, on impose une surconsommation modérée au moteur 26, provoquant par exemple une élévation de la température dans les gaz d'échappement d'environ 30°C, notamment par combustion d'un excès de carburant dans les cylindres du moteur 26.

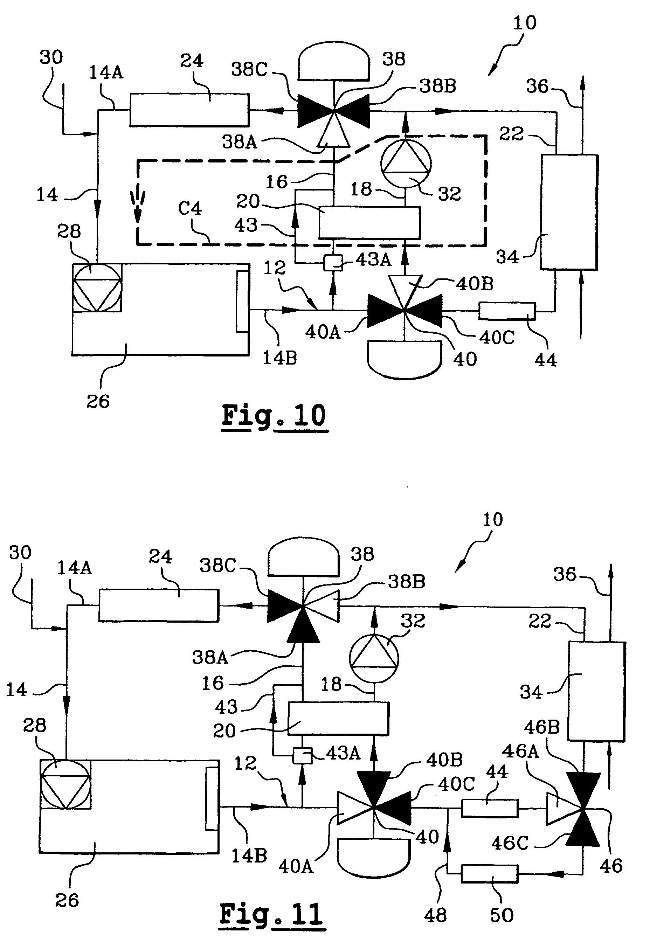

Ainsi, pendant la troisième phase de fonctionnement, les vannes 38, 40 sont réglées de façon, d'une part, à isoler les deux branches 16, 18, de stockage d'énergie du circuit 12 de liquide caloporteur (la pompe électrique 32 est à l'arrêt) et, d'autre part, à raccorder la branche de régénération 22 à la branche de régulation thermique 14. Le liquide caloporteur circule dans le circuit 12 conformément à la boucle C4 illustrée sur la figure 10, si bien que ce liquide caloporteur prélève des calories dans les gaz d'échappement, par l'intermédiaire de l'échangeur 34, et les restitue à l'habitacle, par l'intermédiaire des aérothermes 24 et 44.

La durée de cette troisième phase de fonctionnement est par exemple égale à 2 minutes environ.

Au cours de la quatrième phase de fonctionnement, on impose une surconsommation forte au moteur 26, notamment par combustion de carburant dans un pot catalytique d'une ligne d'échappement dans laquelle circule les gaz d'échappement, provoquant par exemple une élévation de température des gaz d'échappement de 300 à 400°C environ et une élévation de la température du liquide caloporteur circulant dans le moteur 26 de 15 à 20°C environ.

Pendant cette quatrième phase de fonctionnement, le dispositif de régulation thermique 10 est réglé dans une configuration de fonctionnement similaire à celle illustrée sur la figure 8. Ainsi, le liquide caloporteur prélève des calories dans les gaz d'échappement, par l'intermédiaire de l'échangeur thermique 34 et répartit ces calories dans les moyens de stockage d'énergie 20 et dans l'habitacle, par l'intermédiaire de l'aérotherme 44. Cette répartition peut être contrôlée en réglant la vanne 40 et la vitesse de rotation du ventilateur associé à l'aérotherme 44.

La durée de la quatrième phase de fonctionnement est par exemple de 4 à 6 minutes environ.

Bien entendu, l'homme du métier pourra déterminer d'autres réglages possibles du dispositif de régulation thermique 10 pour obtenir des stratégies différentes de régulation thermique de l'habitacle et du moteur 26 ainsi que de régénération des moyens 20 de stockage d'énergie.

La branche de régénération 22 du dispositif de régulation thermique 10 selon le cinquième mode de réalisation de l'invention illustré sur la figure 11, comprend des moyens, notamment une vanne 46 de type trois voies, pour raccorder en parallèle l'aérotherme supplémentaire 44 à une branche de régulation thermique supplémentaire 48.

La vanne 46 est munie d'une première voie de 46A raccordée à l'aérotherme supplémentaire 44, d'une deuxième voie 46B raccordée à l'échangeur thermique 34 liquide caloporteur/gaz d'échappement, et d'une troisième voie 46C raccordée à une extrémité amont de la branche de régulation thermique supplémentaire 48.

La branche de régulation thermique supplémentaire 48 comprend, de préférence, un échangeur thermique 50 liquide caloporteur/fluide à réguler. Ce fluide à réguler est par exemple de l'huile pour le moteur du véhicule, du carburant ou tout autre liquide auquel on souhaite notamment céder des calories.

Ainsi, la branche de régulation thermique supplémentaire 48 permet de fournir des calories à un fluide à réguler, par exemple lorsque la température de l'air environnant le véhicule est relativement modérée, c'est-à-dire comprise entre 0 et 20°C.

Parmi les avantages de l'invention, on notera que celle-ci permet de régénérer rapidement les moyens de stockage d'énergie par prélèvement de calories, selon les cas, dans les gaz d'échappement et dans le liquide caloporteur destiné à la régulation thermique du moteur.

Par ailleurs; les calories prélevées aux gaz d'échappement étant transmises aux moyens de stockage d'énergie par un liquide caloporteur distinct des gaz d'échappement, on évite des risques d'encrassement des moyens de stockage d'énergie par les gaz.

Le dispositif de régulation thermique selon l'invention permet le cas échéant de chauffer l'habitacle du véhicule alors que ce moteur est à l'arrêt. Cette caractéristique est particulièrement intéressante dans un véhicule de type « stop/start » dans lequel le moteur thermique du véhicule est susceptible d'être arrêté puis redémarré à l'aide de moyens électriques pouvant être commandés par une pédale d'accélérateur ou un levier de changement de vitesse.

Le dispositif de régulation thermique selon l'invention permet également de chauffer l'habitacle à l'aide de calories prélevées dans les gaz d'échappement du véhicule.

L'invention ne se limite pas aux modes de réalisation décrits précédemment.

En particulier, le circuit de régulation thermique peut être un circuit de refroidissement d'un organe exothermique quelconque du véhicule autre que le moteur à combustion interne.

Par ailleurs, la branche de régénération 22 peut comporter un échangeur autre que l'échangeur liquide caloporteur/gaz d'échappement décrit ci-dessus, en particulier un échangeur liquide caloporteur/vecteur de calories provenant directement ou indirectement d'un organe électrique ou électronique du véhicule.

## Revendications

1. Dispositif de régulation thermique pour véhicule automobile, comportant un circuit de liquide caloporteur (12) comprenant :
- une branche de régulation thermique (14),
- une première branche (16) munie de moyens de stockage d'énergie (20 ; 20A) susceptibles d'être régénérés, dite première branche (16) de stockage d'énergie,
- des moyens (38) de raccordement sélectif de la première branche (16) de stockage d'énergie à la branche de régulation thermique (14), et
- une seconde branche (18) munie de moyens de stockage d'énergie (20 ; 20B) susceptibles d'être régénérés, dite seconde branche (18) de stockage d'énergie,
**caractérisé en ce que** le circuit de liquide caloporteur comprend en outre :
- une branche (22) de régénération des moyens (20 ; 20B) de stockage d'énergie de la seconde branche (18) de stockage d'énergie, cette branche (22) de régénération comportant des moyens (34) destinés à céder des calories aux moyens (20 ; 20B) de stockage d'énergie, et
- des moyens (40) de raccordement sélectif de la seconde branche (18) de stockage d'énergie à la branche de régulation thermique (14) et à la branche de régénération (22).

2. Dispositif selon la revendication 1, **caractérisé en ce que** la branche de régulation thermique (14) comprend une partie amont (14A), munie d'un aérotherme (24) de régulation thermique d'un habitacle du véhicule, raccordée à une partie aval (14B) de régulation thermique d'un moteur à combustion interne (26) du véhicule.

3. Dispositif selon la revendication 2, **caractérisé en ce que** la branche de régénération (22) comprend des moyens de prélèvement de calories dans les gaz d'échappement émis par le moteur à combustion interne (26), de préférence un échangeur thermique (34) liquide caloporteur/ gaz d'échappement émis par le moteur à combustion interne (26).

4. Dispositif selon la revendication 2 ou 3, **caractérisé en ce que** le circuit de liquide caloporteur (12) comprend des moyens (42) de dérivation de la partie aval de régulation thermique (14B), raccordant directement une sortie de l'aérotherme (24) avec une entrée des moyens (20) de stockage d'énergie de la seconde branche (18) de stockage d'énergie.

5. Dispositif selon l'une quelconque des revendications 2 à 4, **caractérisé en ce que** le liquide caloporteur est un liquide de refroidissement du moteur à combustion interne (26), notamment un mélange d'eau et d'antigel.

6. Dispositif selon l'une quelconque des revendications 2 à 4, **caractérisé en ce que** la branche de régénération (22) comprend un aérotherme supplémentaire (44) de régulation thermique de l'habitacle.

7. Dispositif selon la revendication 6, **caractérisé en ce que** la branche de régénération (22) comprend des moyens (46) de raccordement en parallèle de l'aérotherme supplémentaire (44) à une branche de régulation thermique supplémentaire (48).

8. Dispositif selon l'une quelconque des revendications 1 à 7, **caractérisé en ce qu'**il comprend des moyens (43) de dérivation des moyens (20) de stockage d'énergie de la première branche (16) de stockage d'énergie.

9. Dispositif selon la revendication 8, **caractérisé en ce qu'**il comprend des moyens (43A) d'activation, de préférence de façon automatique, des moyens de dérivation des moyens (20) de stockage d'énergie de la première branche (16) de stockage d'énergie.

10. Dispositif selon l'une quelconque des revendications 1 à 9, **caractérisé en ce que** le circuit de liquide caloporteur (12) comprend une vanne (38), de type trois voies, munie d'une première voie (38A) raccordée à une extrémité aval de la première branche (16) de stockage d'énergie, d'une deuxième voie (38B) raccordée à une extrémité aval de la seconde branche (18) de stockage d'énergie et à la branche de régénération (22), et d'une troisième voie (38C) raccordée à une extrémité amont de la branche de régulation thermique (14).

11. Dispositif selon l'une quelconque des revendications 1 à 10, **caractérisé en ce que** le circuit de liquide caloporteur (12) comprend une vanne (40) de type trois voies munie d'une première voie (40A) raccordée à une extrémité aval de la branche de régulation thermique (14), d'une deuxième voie (40B) raccordée à une extrémité amont de la seconde branche (18) de stockage d'énergie, et d'une troisième voie (40C) raccordée à la branche de régénération (22).

12. Dispositif selon l'une quelconque des revendications 1 à 11, **caractérisé en ce que** la seconde branche (18) de stockage d'énergie est munie d'une pompe électrique (32) d'entraînement du liquide caloporteur.

13. Dispositif selon l'une quelconque des revendications 1 à 12, **caractérisé en ce que** les première (16) et seconde (18) branches de stockage d'énergie comprennent des moyens (20) de stockage d'énergie communs.

14. Dispositif selon l'une quelconque des revendications 1 à 12, **caractérisé en ce que** les première (16) et seconde (18) branches de stockage d'énergie comprennent des moyens (20A, 20B) de stockage d'énergie séparés.

## Patentansprüche

1. Vorrichtung zum Wärmeregulieren für ein Kraftfahrzeug, umfassend einen Kühlflüssigkeitskreislauf (12) mit:
- einem Wärmeregulierungsstrang (14),
- einem ersten Strang (16) versehen mit Mitteln zum Energiespeichern (20; 20A), die regeneriert werden können, erster Strang (16) zum Energiespeichern genannt,
- Mitteln (38) zum selektiven Anschließen des ersten Strangs (16) zum Energiespeichern an den Wärmeregulierungsstrang (14) und
- einem zweiten Strang (18), versehen mit Mitteln zum Energiespeichem (20; 20B), die regeneriert werden können, zweiter Strang (18) zum Energiespeichern genannt,
**dadurch gekennzeichnet, dass** der Kühlflüssigkeitskreislauf ferner Folgendes umfasst:
- einen Strang (22) zum Regenerieren der Energiespeichermittel (20; 20B) des zweiten Strangs (18) zum Energiespeichern, wobei dieser Strang (22) zum Regenerieren Mittel (34) umfasst, die dazu bestimmt sind, an die Mittel (20; 20B) zum Energiespeichem Kalorien abzugeben, und
- Mittel (40) zum selektiven Anschließen des zweiten Strangs (18) zum Energiespeichern an den Wärmeregulierungsstrang (14) und an den Regenerierungsstrang (22).

2. Vorrichtung nach Anspruch 1, **dadurch gekennzeichnet, dass** der Wärmeregulierungsstrang (14) einen stromaufwärts liegenden Teil (14A) umfasst, der mit einem Lufterhitzer (24) zur Wärmeregulierung eines Kraftfahrzeuginnenraums versehen ist, der an einen stromabwärts liegenden Teil (14B) zur Wärmeregulierung eines Verbrennungsmotors (26) des Kraftfahrzeugs angeschlossen ist.

3. Vorrichtung nach Anspruch 2, **dadurch gekennzeichnet, dass** der Regenerierungsstrang (22) Mittel zur Entnahme von Kalorien aus den Abgasen, die von einem Verbrennungsmotor (26) abgegeben werden, umfasst, vorzugsweise einen Wärmeaustauscher (34) zwischen Kühlflüssigkeit/von dem Verbrennungsmotor (26) abgegebene Abgase.

4. Vorrichtung nach Anspruch 2 oder 3, **dadurch gekennzeichnet, dass** der Kühlflüssigkeitskreislauf (12) Mittel (42) zum Abzweigen des stromabwärts liegenden Teils der Wärmeregulierung (14B) umfasst, die einen Ausgang des Lufterhitzers (24) direkt mit einem Eingang der Mittel (20) zum Energiespeichern des zweiten Strangs (18) zum Energiespeichern verbinden.

5. Vorrichtung nach einem der Ansprüche 2 bis 4, **dadurch gekennzeichnet, dass** die Kühlflüssigkeit eine Kühlflüssigkeit des Verbrennungsmotors (26) ist, insbesondere ein Gemisch aus Wasser und Frostschutzmittel.

6. Vorrichtung nach einem der Ansprüche 2 bis 4, **dadurch gekennzeichnet, dass** der Regenerierungsstrang (22) einen zusätzlichen Lufterhitzer (44) zur Wärmeregulierung des Kraftfahrzeugsinnenraums umfasst.

7. Vorrichtung nach Anspruch 6, **dadurch gekennzeichnet, dass** der Regenerierungsstrang (22) Mittel (46) zum parallelen Anschließen des zusätzlichen Lufterhitzers (44) an einen zusätzlichen Wärmeregulierungsstrang (48) umfasst.

8. Vorrichtung nach einem der Ansprüche 1 bis 7, **dadurch gekennzeichnet, dass** sie Mittel (43) zum Abzweigen der Mittel (20) zum Energiespeichern des ersten Strangs (16) zum Energiespeichern umfasst.

9. Vorrichtung nach Anspruch 8, **dadurch gekennzeichnet, dass** sie Mittel (43A) zum vorzugsweise automatischen Aktivieren der Mittel zum Abzweigen der Mittel (20) zum Energiespeichern des ersten Strangs (16) zum Energiespeichern umfasst.

10. Vorrichtung nach einem der Ansprüche 1 bis 9, **dadurch gekennzeichnet, dass** der Kühlflüssigkeitskreislauf (12) ein Ventil (38) des Dreiwegetyps umfasst, das mit einem ersten Kanal (38A), der an ein stromabwärts liegendes Ende des ersten Strangs (16) zum Energiespeichern angeschlossen ist, einem zweiten Kanal (38B), der an ein stromabwärts liegendes Ende des zweiten Strangs (18) zum Energiespeichern und an den Regenerierungsstrang (22) angeschlossen ist, und mit einem dritten Kanal (38C), der an ein stromaufwärts liegendes Ende des Wärmeregulierungsstrangs (14) angeschlossen ist, versehen ist.

11. Vorrichtung nach einem der Ansprüche 1 bis 10, **dadurch gekennzeichnet, dass** der Kühlflüssigkeitskreislauf (12) ein Ventil (40) des Dreiwegetyps umfasst, das mit einem ersten Kanal (40A), der an ein stromabwärts liegendes Ende des Wärmeregulierungsstrangs (14) angeschlossen ist, einem zweiten Kanal (40B), der an ein stromaufwärts liegendes Ende des zweiten Strangs (18) zum Energiespeichem angeschlossen ist, und mit einem dritten Kanal (40C), der an den Regenerierungsstrang (22) angeschlossen ist, versehen ist.

12. Vorrichtung nach einem der Ansprüche 1 bis 11, **dadurch gekennzeichnet, dass** der zweite Strang (18) zum Energiespeichern mit einer elektrischen Pumpe (32) zum Umwälzen der Kühlflüssigkeit versehen ist.

13. Vorrichtung nach einem der Ansprüche 1 bis 12, **dadurch gekennzeichnet, dass** der erste (16) und zweite (18) Strang zum Energiespeichern gemeinsame Mittel (20) zum Energiespeichem umfassen.

14. Vorrichtung nach einem der Ansprüche 1 bis 12, **dadurch gekennzeichnet, dass** der erste (16) und zweite (18) Strang zum Energiespeichern getrennte Mittel (20A, 20B) zum Energiespeichern umfassen.

## Claims

1. A temperature regulator device for a motor vehicle, the device comprising a heat transfer liquid circuit (12) comprising:
- a temperature regulation branch (14);
- a first branch (16) provided with energy storage means (20; 20A) that are suitable for being regenerated, referred to as the first energy storage branch (16);
- means (38) for selectively connecting the first energy storage branch (16) to the temperature regulation branch (14); and
- a second branch (18) provided with energy storage means (20; 20B) that are suitable for being regenerated, referred to as the second energy storage branch (18);
the temperature regulator device being **characterized in that** the heat transfer liquid circuit further comprises:
- a regeneration branch (22) for regenerating the energy storage means (20; 20B) of the second energy storage branch (18), said regeneration branch (22) including means (34) for delivering heat to the energy storage means (20; 20B); and
- means (40) for selectively connecting the second energy storage branch (18) to the temperature regulation branch (14) and to the regeneration branch (22).

2. A device according to claim 1, **characterized in that** the temperature regulation branch (14) includes an upstream portion (14A) that is provided with a radiator unit (24) for regulating the temperature of a vehicle cabin and that is connected to the downstream portion (14B) for regulating the temperature of an internal combustion engine (26) of the vehicle.

3. A device according to claim 2, **characterized in that** the regeneration branch (22) includes means for taking heat from the exhaust gases given off by the internal combustion engine (26), preferably a heat exchanger (34) for exchanging heat between the heat transfer liquid and the exhaust gas given off by the internal combustion engine (26).

4. A device according to claim 2 or claim 3, **characterized in that** the heat transfer liquid circuit (12) includes means (42) for bypassing the temperature regulating downstream portion (14B), directly connecting an outlet from the radiator unit (24) with an inlet of the energy storage means (20) of the second energy storage branch (18).

5. A device according to any one of claims 2 to 4, **characterized in that** the heat transfer liquid is a cooling liquid for the internal combustion engine (26), in particular a mixture of water and antifreeze.

6. A device according to any one of claims 2 to 4, **characterized in that** the regeneration branch (22) includes an additional radiator unit (44) for regulating the temperature of the cabin.

7. A device according to claim 6, **characterized in that** the regeneration branch (22) includes means (46) for connecting the additional radiator unit (44) in parallel with an additional temperature regulation branch (48).

8. A device according to any one of claims 1 to 7, **characterized in that** it includes means (43) for bypassing the energy storage means (20) of the first energy storage branch (16).

9. A device according to claim 8, **characterized in that** it includes activation means for activating, preferably automatically, bypass means for bypassing the energy storage means (20) of the first energy storage branch (16).

10. A device according to any one of claims 1 to 9, **characterized in that** the heat transfer liquid circuit (12) includes a three-port type valve (38) having a first port (38A) connected to a downstream end of the first energy storage branch (16), a second port (38B) connected to a downstream end of the second energy storage branch (18) and to the regeneration branch (22), and a third port (38C) connected to an upstream end of the temperature regulation branch (14).

11. A device according to any one of claims 1 to 10, **characterized in that** the heat transfer liquid circuit (12) includes a three-port type valve (40) having a first port (40A) connected to a downstream end of the temperature regulation branch (14), a second port (40B) connected to an upstream end of the second energy storage branch (18), and a third port (40C) connected to the regeneration branch (22).

12. A device according to one of claims 1 to 11, **characterized in that** the second energy storage branch (18) is provided with an electric pump (32) for driving the heat transfer liquid.

13. A device according to any one of claims 1 to 12, **characterized in that** the first (16) and second (18) energy storage branches include common energy storage means (20).

14. A device according to any one of claims 1 to 12, **characterized in that** the first (16) and second (18) energy storage branches include separate energy storage means (20A, 20B).
